# EUROPÄISCHE PATENTSCHRIFT

(11) **EP 2 429 731 B1**
(45) Veröffentlichungstag und Bekanntmachung des Hinweises auf die Patenterteilung: **18.06.2014**
(21) Anmeldenummer: 10720009.9
(22) Anmeldetag: 05.05.2010
(51) Int. Cl.: B21B 21/04

(54) **SPANNFUTTER FÜR EINE KALTPILGERWALZANLAGE**
CHUCK FOR A COLD-PILGERING MILL
MANDRIN DE SERRAGE POUR LAMINOIR À PAS DE PÈLERIN

(30) Priorität: 15.05.2009 DE 102009003172
(43) Veröffentlichungstag der Anmeldung: 21.03.2012
(73) Patentinhaber: Sandvik Materials Technology Deutschland GmbH, 40549 Düsseldorf (DE)
(72) Erfinder: FROBÖSE, Thomas, 33775 Versmold (DE)
(74) Vertreter: WSL Patentanwälte Partnerschaft mbB
(86) Internationale Anmeldenummer: PCT/EP2010/056113
(87) Internationale Veröffentlichungsnummer: WO 2010/130614

(56) Entgegenhaltungen:
- DE-C2- 3 428 437
- DE-T2- 68 919 343
- SU-A1- 770 579

## Beschreibung

Die vorliegende Erfindung betrifft ein Spannfutter für eine Kaltpilgerwalzanlage mit einer Spannhülse und mindestens zwei Spannbackenträgern, siehe z.B. SU 770579 A1.

Zur Herstellung von präzisen Metallrohren, insbesondere aus Stahl, wird ein ausgedehnter hohlzylindrischer Rohling im vollständig erkalteten Zustand durch Druckspannungen kalt reduziert. Dabei wird der Rohling zu einem Rohr mit definiertem reduzierten Außendurchmesser und einer definierten Wanddicke umgeformt.

Das am weitesten verbreitete Reduzierverfahren für Rohre ist als Kaltpilgern bekannt, wobei der Rohling Luppe genannt wird. Die Luppe wird beim Walzen über einen kalibrierten, d. h. den Innendurchmesser des fertigen Rohrs aufweisenden Walzdorn geschoben und dabei von außen von zwei kalibrierten, d. h. den Außendurchmesser des fertigen Rohrs definierenden Walzen umfasst und in Längsrichtung über den Walzdorn ausgewalzt.

Während des Kaltpilgerns erfährt die Luppe einen schrittweisen Vorschub in Richtung auf den Walzdorn zu bzw. über diesen hinweg, während die Walzen drehend über den Dorn und damit die Luppe horizontal hin- und herbewegt werden. Dabei wird die Horizontalbewegung der Walzen durch ein Walzgerüst vorgegeben, an dem die Walzen drehbar gelagert sind. Das Walzgerüst wird in bekannten Kaltpilgerwalzanlagen mit Hilfe eines Kurbelantriebs in einer Richtung parallel zum Walzdorn hin- und herbewegt, während die Walzen selbst ihre Drehbewegung durch eine relativ zum Walzgerüst feststehende Zahnstange erhalten, in welche die fest mit den Walzenachsen verbundenen Zahnräder eingreifen.

Die im Walzgerüst übereinander angeordneten konisch kalibrierten Walzen drehen sich entgegen der Vorschubrichtung des Vorschubspannschlittens. Das von den Walzen gebildete sogenannte Pilgermaul erfasst die Luppe und die Walzen drücken von außen eine kleine Werkstoffwelle ab, die vom Glättkaliber der Walzen und dem Walzdorn zu der vorgesehenen Wanddicke ausgestreckt wird, bis das Leerlaufkaliber der Walzen das fertige Rohr freigibt. Während des Walzens bewegt sich das Walzgerüst mit den daran befestigten Walzen entgegen der Vorschubrichtung der Luppe.

Der Vorschub der Luppe über den Dorn erfolgt mit Hilfe eines Vorschubspannschlittens, welcher eine Translationsbewegung in einer Richtung parallel zur Achse des Walzdorns ermöglicht. Mit Hilfe des Vorschubspannschlittens wird die Luppe nach dem Erreichen des Leerlaufkalibers der Walzen um einen weiteren Schritt auf den Walzdorn vorgeschoben, während die Walzen mit dem Walzgerüst in ihre horizontale Ausgangslage zurückkehren. Gleichzeitig wird die Luppe von dem Spannfutter des Vorschubspannschlittens angetrieben um ihre Achse gedreht, um eine gleichmäßige Form des fertigen Rohrs zu erreichen. Durch mehrfaches Überwalzen jedes Rohrabschnitts werden eine gleichmäßige Wanddicke und Rundheit des Rohrs sowie gleichmäßige Innen- und Außendurchmesser erreicht.

Um die Luppe zu halten und sie in eine Translationsbewegung auf den Walzdorn hin sowie eine Drehbewegung um den Walzdorn versetzen zu können, weist der Vorschubspannschlitten ein Spannfutter auf, mit welchem die Luppe zwischen drei Spannbacken gehalten wird.

Die aus dem Stand der Technik bekannten Spannfutter weisen eine hohlzylindrische Führungshülse auf, in welche von der Stirnseite her Spannbacken eingelegt werden, welche mit Hilfe eine ebenfalls von der Stirnseite der Führungshülse einzubringenden Spannhülse gegen die Luppe gepresst werden. Aufgrund der stirnseitig in die Führungshülse einzubringenden Spannbacken ist ein Spannbackenwechsel bei diesen aus dem Stand der Technik bekannten Spannfuttern personal- und zeitaufwendig, da die einzelnen Spannbacken jeweils für sich beim Einbau gehalten werden müssen.

Die aus dem Stand der Technik bekannten Kaltpilgerwalzanlagen ermöglichen jeweils nur das Auswalzen von Rohren mit einem einzigen Rohrdurchmesser sowie einer einzigen durch den jeweiligen Walzdorn vorgegebenen Wandstärke des Rohrs. Die Umstellung der Produktion auf einen anderen Rohrtyp mit einem anderen Durchmesser und/oder einer anderen Wandstärke erfordert einen aufwendigen Umbau der gesamten Anlage. Dazu müssen die Spannbackenträger des Spannfutters des Vorschubspannschlittens, die Spannbackenträger der anderen für den Transport der Luppe vor und des fertigen Rohrs hinter dem Walzdorn vorgesehenen Futter sowie der Walzdorn aufwendig demontiert, gegen Spannbackenträger bzw. Walzdorne mit den passenden neuen Durchmessern ausgetauscht und diese wiederum aufwendig montiert werden.

Aufgrund dessen, dass die Spannbackenträger von der Stirnseite her in die Führungshülsen eingelegt werden müssen, können die aus dem Stand der Technik bekannten Spannfutter in Kaltpilgerwalzanlagen nur an ihrem einen, den Spannbackenträgern entgegengesetzten Ende in einem Lager drehbar gehalten werden.

Gegenüber diesem Stand der Technik ist es Aufgabe der vorliegenden Erfindung ein Spannfutter für eine Kaltpilgerwalzanlage bereitzustellen, welches ein einfaches Wechseln der Spannbackenträger und somit ein schnelles und kostengünstiges Anpassen der Kaltpilgerwalzanlage auf Rohre mit unterschiedlichen Durchmessern und Wandstärken ermöglicht. Weiterhin ist es Aufgabe der vorliegenden Erfindung ein Spannfutter bereitzustellen, welches sowohl als Futter für die Luppe bzw. das fertige Rohr an allen Stellen in der Anlage, d. h. vor und hinter dem Walzdorn, als auch für die Halterung des Walzdorns selbst verwendet werden kann.

Zumindest eine der zuvor genannten Aufgaben wird erfindungsgemäß durch ein Spannfutter für eine Kaltpilgerwalzanlage mit den Merkmalen von Anspruch 1 gelöst.

Das erfindungsgemäße Spannfutter ermöglicht es, die Spannbackenträger mit den daran befestigbaren eigentlichen Spannbacken in radialer Richtung in das Futter einzubringen und einzeln, nacheinander an bzw. in dem Futter zu befestigen. Im Gegensatz zu dem axialen Einbringen der Spannbackenträger aus dem Stand der Technik ermöglicht es die erfindungsgemäße Vorrichtung aufgrund der radialen Einbringung der Spannbackenträger, die Spannbackenträger einfach zu tauschen und somit alle Spannfutter der Kaltpilgerwalzanlage schnell an neue Rohrdurchmesser bzw. Wandstärken anzupassen.

Darüber hinaus kann das erfindungsgemäße Spannfutter mit Lagern an seinen beiden gegenüberliegenden Enden gehalten werden, da eine axiale Zugänglichkeit von zumindest einer der Stirnseiten her nicht mehr erforderlich ist und darüber hinaus ermöglicht es das erfindungsgemäße Spannfutter nicht nur die Luppe oder das fertige Rohr einzuspannen, sondern bei Verwendung an einer entsprechenden Stelle der Kaltpilgerwalzanlage auch den Walzdorn, der sich in dem erfindungsgemäßen Futter aufgenommen einfach und schnell gegen Dorne mit anderen Durchmessern tauschen lässt.

Zum besseren Verständnis des Grundgedankens des erfindungsgemäßen Spannfutters wird nun der Prozess des Einlegens der Spannbackenträger in ein Spannfutter gemäß einer Ausführungsform mit nur zwei Spannbackenträgern beschrieben.

In einem ersten Schritt wird die hohlzylindrische Spannhülse in axialer Richtung so verfahren, dass sie das Einführen des ersten Spannbackenträgers in radialer Richtung in das Spannfutter ermöglicht. Dabei wird der Spannbackenträger vorzugsweise senkrecht von oben in das Futter eingelegt. Nachfolgend wird die Spannhülse einen Schritt weit verfahren, so dass der Rand der Hülse den ersten Spannbackenträger zumindest abschnittsweise überdeckt. Ein Herausfallen des Spannbackenträgers aus dem Spannfutter wird so verhindert. Das Spannfutter bzw. die Spannhülse mit dem ersten Spannbackenträger können nun aus der vertikalen Position des ersten Spannbackenträgers herausgedreht werden. Dabei beträgt die Drehung des Spannfutters bei dem Beispiel eines Spannfutters mit nur zwei Spannbackenträgern vorzugsweise 180°, so dass auch der zweite Spannbackenträger senkrecht von oben in das Spannfutter eingelegt werden kann. Um trotz des Verfahrens der Spannhülse in axialer Richtung, so dass der erste Spannbackenträger nicht aus dem Futter herausfallen kann, ein Einlegen des zweiten Spannbackenträgers in das Spannfutter zu ermöglichen, weist die Spannhülse erfindungsgemäß eine Durchbrechung auf.

Dabei ist die Durchbrechung in einer Ausführungsform der Erfindung ein sich von einem ersten Ende der Spannhülse oder deren Grundfläche aus erstreckender Schlitz, welcher in Umfangsrichtung eine Breite aufweist, die in etwa der Breite des Spannbackenträgers entspricht, während die Länge der Durchbrechung in axialer Richtung gerade so bemessen ist, dass sie ein Einlegen des zweiten Spannbackenträgers ermöglicht, obwohl die Spannhülse um einen Schritt verschoben wurde, um mit ihrem Rand die erste Spannbacke in dem Futter zu halten.

Da die Spannhülse an ihrer inneren Mantelfläche zumindest einen Spannabschnitt aufweist, dessen Oberfläche in axialer Richtung einen Winkel mit der Zylinderachse einschließt und jeder Spannbackenträger keilförmig ausgestaltet ist, wird beim weiteren Zuschieben und in Eingriff treten des Spannabschnitts mit den Außenflächen der Spannbackenträger auf die Spannbackenträger und damit auf die mit dem Spannbackenträger verbundenen Spannbacken in radialer Richtung eine Kraft ausgeübt, welche das in dem Futter aufgenommene Objekt, d. h. insbesondere die Luppe oder auch den Spanndorn, hält.

In einer Ausführungsform weist die Spannhülse mindestens eine erste und eine zweite schlitzförmige Durchbrechung auf, wobei die erste und die zweite Durchbrechung in einer Richtung parallel zur Zylinderachse voneinander beabstandete Enden aufweisen. In einer solchen Ausführungsform lassen sich mit der Spannhülse zwei oder auch drei Spannbackenträger entsprechend dem oben beschriebenen Verfahren in dem Spannbackenträger aufnehmen.

In einer bevorzugten Ausführungsform weist die Spannhülse drei in Umfangsrichtung um je 120° voneinander beabstandete schlitzförmige Durchbrechungen auf, die in einer Richtung parallel zur Zylinderachse voneinander beabstandete Enden aufweisen. Mit einer derartigen Anordnung lassen sich drei gleichmäßig über den Umfang des Spannfutters verteilte Spannbackenträger in einem Spannfutter aufnehmen. Dabei kommt es entscheidend darauf an, dass die Enden der Durchbrechungen an unterschiedlichen axialen Positionen angeordnet sind, um ein nacheinander erfolgendes Einlegen der einzelnen Spannbackenträger zu ermöglichen.

In einer weiteren Ausführungsform der Erfindung ist die Spannhülse um die Zylinderachse vorzugsweise motorisch angetrieben drehbar. Auf diese Weise kann durch Drehen der Spannhülse ein bereits eingelegter Spannbackenträger um eine gewisse Winkelposition gedreht werden, um das Einlegen der weiteren Spannbackenträger zu ermöglichen. Dabei nimmt in einer Ausführungsform der Erfindung die Spannhülse, d. h. insbesondere die Seitenwände des entsprechenden Durchbruchs, den Spannbackenträger bei der Drehung mit und positioniert diesen in einer neuen Winkelposition.

In einer bevorzugten Ausführungsform weist die Durchbrechung der Spannhülse in einem zu der Zylinderachse senkrechten Querschnitt betrachtet einen in Umfangsrichtung verjüngten Abschnitt auf. Wird in eine solche Durchbrechung ein entsprechend komplementär ausgestalteter Spannbackenträger in radialer Richtung eingeführt, so wird dieser in einer bestimmten radialen Position von der Verjüngung der Durchbrechung gehalten.

In einer weiteren bevorzugten Ausführungsform weist das Spannfutter eine im Wesentlichen hohlzylindrische Führungshülse mit einem ersten und einem zweiten Ende auf, in welcher das mit dem Spannfutter zu haltende Objekt aufnehmbar ist, wobei die Führungshülse zumindest eine Durchbrechung zur Aufnahme eines Spannbackenträgers aufweist.

In einer Ausführungsform wird die Führungshülse konzentrisch von der Spannhülse umgeben, wobei die Spannhülse axial relativ zu der Führungshülse bewegbar bzw. verschiebbar ist.

In einer bevorzugten Ausführungsform der Erfindung ist die Führungshülse, vorzugsweise zusammen mit der Spannhülse um die Zylinderachse drehbar, wobei die Führungshülse an ihrem ersten und ihrem zweiten Ende je ein Lager aufweist, und die Spannbacken und die Spannhülse zwischen den Lagern angeordnet sind. Erst das erfindungsgemäße Spannfutter, insbesondere die Kombination aus Spannbackenträgern und Spannhülse, ermöglicht es, das Spannfutter bzw. seine Führungshülse an zwei gegenüberliegenden Enden davon zu lagern. Dies bedeutet gegenüber solchen Spannfuttern, welche nur eine einseitige Lagerung aufweisen, eine deutlich erhöhte Stabilität der Anlage und dadurch reduzierte Schwingungen der Luppe bzw. des reduzierten Rohrs.

Die vorliegende Erfindung betrifft auch eine Kaltpilgerwalzanlage mit einem Spannfutter in einer der zuvor beschriebenen Ausführungsformen. Dabei kann das erfindungsgemäße Spannfutter in der Kaltpilgerwalzanlage sowohl zum Aufnehmen und Halten der Luppe bzw. des fertig reduzierten Rohrs eingesetzt werden als auch zur Halterung des Walzdorns bzw. eines Werkzeughalters, d.h. einer Dornstange, welche den Walzdorn trägt.

In einer Ausführungsform weist die erfindungsgemäße Kaltpilgerwalzanlage eine Mehrzahl von Vorschub- und Halteeinrichtungen mit jeweils mindestens einem Spannfutter, so wie es zuvor beschrieben wurde auf. Die Vorschub- und Halteeinrichtungen sind insbesondere ein Dornwiderlager, eine Vorschubspanneinrichtung für die Luppe, eine Einlaufspanneinrichtung für die Luppe, eine Auslaufspanneinrichtung für das reduzierte Rohr und eine Spanneinrichtung für einen Walzdorn oder einen mit diesem verbundenen Werkzeughalter.

In einer bevorzugten Ausführungsform der erfindungsgemäßen Kaltpilgerwalzanlage sind alle Spannfutter der Anlage bis auf die Dimensionierung der Spannbackenträger identisch. Die Dimensionierung der Spannbackenträger wird an die jeweiligen Erfordernisse angepasst. So wird zum Halten der Dornstange in der Regel ein anderer zu klemmender Nenndurchmesser benötigt als zum Spannen der Luppe oder zum Spannen des fertigen Rohrs.

Die vorliegende Erfindung betrifft weiterhin ein Verfahren zum Montieren von Spannbackenträgern eines Spannfutters für eine Kaltpilgerwalzanlage nach einem der Ansprüche 1 bis 7 mit den Schritten, Verschieben einer hohlzylindrischen Spannhülse, so dass das Futter zum Einbringen der Spannbackenträger geöffnet ist, Einlegen eines ersten Spannbackenträgers in das Futter, verschieben der Spannhülse, so dass die Spannhülse den ersten Spannbackenträger in dem Futter hält, Drehen der Spannhülse zusammen mit dem ersten Spannbackenträger in eine zweite Position, Einlegen eines zweiten Spannbackenträgers in das Futter und Verschieben der Spannhülse über die Spannbackenträger, so dass die Spannhülse eine Kraft auf die Spannbackenträger in radialer Richtung ausübt.

Weitere Vorteile, Merkmale und Anwendungsmöglichkeiten der vorliegenden Erfindung werden anhand der folgenden Beschreibung einer Ausführungsform und der zugehörigen Figuren deutlich.
Figur 1 zeigt eine schematische Seitenansicht des Aufbaus einer Kaltpilgerwalzanlage mit Spannfuttern gemäß einer Ausführungsform der vorliegenden Erfindung.
Figur 2 zeigt eine schematische Seitenansicht eines erfindungsgemäßen Spannfutters der Kaltpilgerwalzanlage aus Figur 1.
Figur 3 zeigt eine weggebrochene Ansicht von oben der Spannhülse einer Ausführungsform des erfindungsgemäßen Spannfutters.
Figur 4 zeigt eine weggebrochene Querschnittsansicht der Spannhülse in einer Ausführungsform der Erfindung in einer Ebene senkrecht zur Zylinderachse.
Figuren 5a bis c zeigen schrittweise den Vorgang des Einlegens von Spannbackenträgern in ein Spannfutter gemäß einer Ausführungsform der vorliegenden Erfindung.

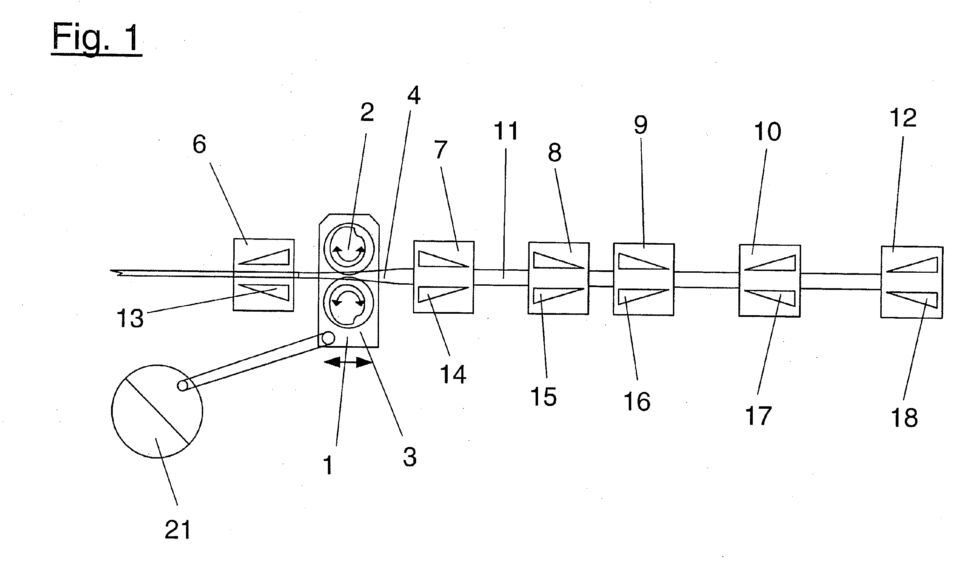

In Figur 1 ist schematisch der Aufbau einer Kaltpilgerwalzanlage mit erfindungsgemäßen Spannfuttern in einer Seitenansicht dargestellt. Die Walzanlage besteht im Wesentlichen aus einem Walzgerüst 1 mit zwei Walzen 2, 3, einem kalibrierten Walzdorn 4 sowie einer Mehrzahl von Spanneinrichtungen 6, 7, 8, 9, 10, 12 mit jeweils einem erfindungsgemäßen Spannfutter 13 bis 18.

In der dargestellten Ausführungsform weist die Kaltpilgerwalzanlage sechs erfindungsgemäße, identische Spannfutter 13 bis 18 auf. Die Spannfutter 13 bis 18 unterscheiden sich lediglich durch die Dimensionierung ihrer Spannbackenträger, welche so bemessen sind, dass sie unterschiedliche Nenndurchmesser klemmen können.

So dienen zwei Dornwiderlager 10, 12 am einlaufseitigen Ende der Kaltpilgerwalzanlage (in Figur 1 rechts) mit je einem Spannfutter 17, 18 zur Halterung der Dornstange, an deren vorderen Ende das eigentliche Werkzeug, nämlich der Walzdorn 4, befestigt ist. Die beiden Spannfutter 17, 18 halten abwechselnd die Dornstange. Wird eine Luppe 11 in die Walzanlage eingeführt, so ist die Spannbacke 18 des ersten Dornwiderlagers 12 geöffnet, während die Spannbacke 17 des zweiten Dornwiderlagers 10 die Dornstange greift. Hat die Luppe 11 das erste Dornwiderlager 12 passiert, so greift das Spannfutter 18 des ersten Dornwiderlagers 12 die Dornstange und das Spannfutter 17 des zweiten Dornwiderlagers 10 wird geöffnet, um die Luppe 11 durchzulassen.

Zwei weitere auf jeweils einem Vorschubspannschlitten 8, 9 montierte Spannfutter 15, 16 klemmen abwechselnd die Luppe 11 und gewährleisten den Vorschub der Luppe 11 über den Dorn 4. Die Einlaufspannvorrichtung 7 klemmt mit Hilfe des Futters 14 die Luppe 11 vor dem Walzgerüst als Einlaufspannfutter. Die Vorschubeinrichtung 6 mit Spannfutter 13 nimmt als Auslaufspannfutter das fertig reduzierte Rohr auf und schiebt es aus der Anlage heraus.

Während des Kaltpilgerns auf der in Figur 1 gezeigten Walzanlage erfährt die Luppe angetrieben durch die Vorschubspannschlitten 7, 8 einen schrittweisen Vorschub in Richtung auf den Walzdorn 4 zu bzw. über diesen hinweg, während die Walzen 2, 3 drehend über den Dorn 4 und damit über die Luppe 11 horizontal hin- und herbewegt werden. Dabei wird die Horizontalbewegung der Walzen 2, 3 durch das Walzgerüst 1 vorgegeben, an dem die Walzen 2, 3 drehbar gelagert sind. Das Walzgerüst 1 wird mit Hilfe eines Kurbelantriebs in einer Richtung parallel zum Walzdorn hin- und herbewegt, während die Walzen 2, 3 selbst ihre Drehbewegung durch eine relativ zum Walzgerüst 1 feststehende Zahnstange erhalten, in die fest mit den Walzenachsen verbundene Zahnräder eingreifen.

Der Vorschub der Luppe 11 über den Dorn 4 erfolgt mit Hilfe der Vorschubspannschlitten 8, 9, welche alternierend die Luppe 11 mit Hilfe der Futter 15, 16 greifen und eine Translationsbewegung in einer Richtung parallel zur Achse des Walzdorns 4 ermöglichen. Die im Walzgerüst 1 übereinander angeordneten konisch kalibrierten Walzen 2, 3 drehen sich entgegen der Vorschubrichtung der Vorschubspannschlitten 8, 9. Das von den Walzen gebildete sogenannte Pilgermaul erfasst die Luppe 11 und die Walzen 2, 3 drücken von außen eine kleine Werkstoffwelle ab, die von einem Glättkaliber der Walzen 2, 3 und dem Walzdorn 4 zu der vorgesehenen Wanddicke ausgestreckt wird, bis ein Leerlaufkaliber der Walzen 2, 3 das fertige Rohr freigibt. Während des Walzens bewegt sich das Walzgerüst 1 mit den daran befestigten Walzen 2, 3 entgegen der Vorschubrichtung der Luppe 11. Mit Hilfe der Vorschubspannschlitten 8, 9 wird die Luppe 11 nach dem Erreichen des Leerlaufkalibers der Walzen 2, 3 um einen weiteren Schritt auf den Walzdorn 4 hin vorgeschoben, während die Walzen 2, 3 mit dem Walzgerüst 1 in ihre horizontale Ausgangslage zurückkehren. Gleichzeitig erfährt die Luppe 11 eine Drehung um ihre Achse, um eine gleichmäßige Form des fertigen Rohrs zu erreichen. Durch mehrfaches Überwalzen jedes Rohrabschnitts wird eine gleichmäßige Wanddicke und Rundheit des Rohrs sowie gleichmäßige Innen- und Außendurchmesser erreicht.

Eine zentrale Ablaufsteuerung steuert die zunächst unabhängigen Antriebe der Walzanlage, so dass der zuvor beschriebene Ablauf des Walzprozesses erzielt wird.

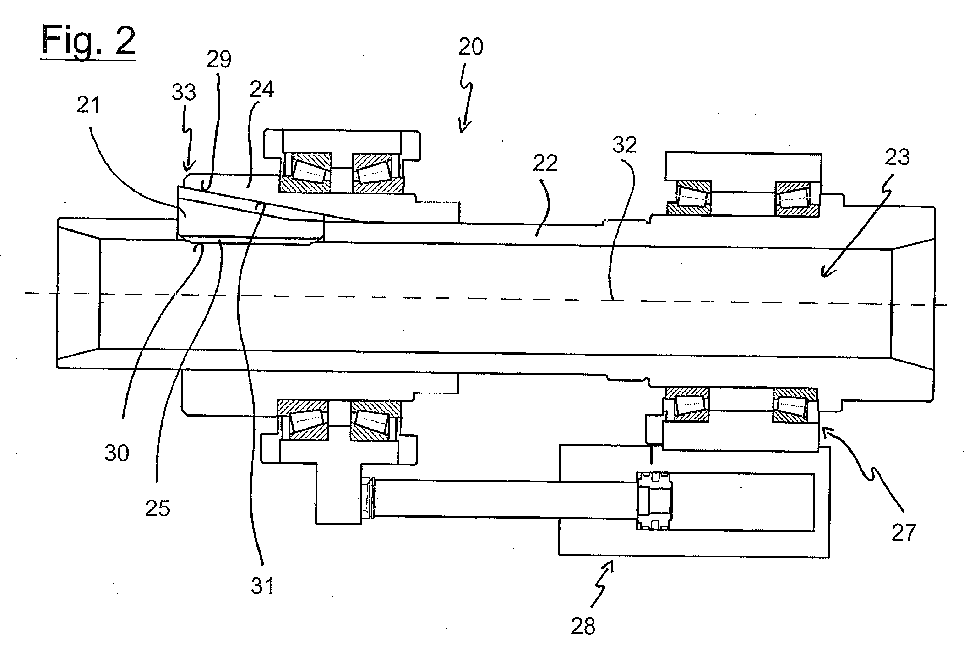

In Figur 2 ist ein erfindungsgemäßes Spannfutter, so wie es in der Kaltpilgerwalzanlage aus Figur 1 zur Halterung der Luppe auf dem Vorschubspannschlitten 5 sowie zur Befestigung des Walzdorns 4 in identischer Form verwendet wird, in einer schematischen seitlichen Schnittansicht dargestellt.

Dabei befindet sich das Spannfutter 20 in Figur 2 in einem vollständig zum Einlegen eines ersten Spannbackenträgers 21 geöffneten Zustand.

Die Grundstruktur des Spannfutters 20 wird von einer hohlzylindrischen Führungshülse 22 gebildet, in deren zylindrischen Hohlraum 23 das zu haltende Objekt, d. h. bei der in Figur 1 dargestellten Kaltpilgerwalzanlage die Luppe bzw. der Walzdorn 4 aufgenommen werden kann. In der dargestellten Ausführungsform verfügt das Spannfutter 20 über drei Spannbackenträger 21, die in Umfangsrichtung um jeweils 120° voneinander beabstandet um die Zylinderachse der Führungshülse 22 bzw. der Spannhülse 24 herum angeordnet sind. Auf diese Weise greifen die Spannbacken 25 der Spannbackenträger 21 das zu haltende Objekt nach Art einer Dreipunktlagerung aus drei verschiedenen Richtungen. Um Drehbewegungen der Luppe bzw. des Walzdorns zu ermöglichen, sind die Führungshülse 22 und die Spannhülse 24 drehbar gelagert. Dazu weist die Führungshülse 22 Lager 27 auf. Dabei ermöglicht es die Ausgestaltung des Spannfutters 20 mit der radialen Einbringung der Spannbackenträger 21, die Spannbackenträger 21 und die Spannhülse 24 zwischen den Lagern 27 anzuordnen bzw. das Futter überhaupt erst mit zwei voneinander beabstandeten Lagern halten zu können. Die Spannhülse 24 ist mit Hilfe eines hydraulischen Antriebs 28 relativ zu der Führungshülse 22 bzw. den Spannbackenträgern 21 verschiebbar.

Jeder Spannbackenträger 21 weist eine der Spannbacke 25 gegenüberliegend angeordnete Außenflächen 29 auf, wobei sich die Klemmfläche 30 der Spannbacke 25 im Wesentlichen parallel zur Zylinderachse der Führungshülse 22 bzw. der Spannhülse 24 erstreckt, während die Außenfläche 29 und die Klemmfläche 30 einen Winkel zueinander einschließen, so dass wie in Figur 2 dargestellt, der Spannbackenträger eine Keilform zwischen der Klemmfläche 30 der Spannbacke 25 und der Außenfläche 29 definiert. Komplementär zu der Ausgestaltung der Außenfläche 29 des Spannbackenträgers 21 weist die Spannhülse 24 eine innere Mantelfläche auf, die abschnittsweise Spannflächen 31 bildet, wobei die Spannflächen 31 mit der Zylinderachse 32 den gleichen Winkel einschließen wie der Winkel zwischen der Klemmfläche 30 und der Außenfläche 29 des Spannbackenträgers 21.

Wie in Figur 2 angedeutet schiebt sich beim Verschieben der Spannhülse 24 in Richtung der Spannbackenträger 21 die Spannfläche 31 der Spannhülse 24 gleitend auf die Außenfläche 29 des Spannbackenträgers 21, wodurch der Spannbackenträger in radialer Richtung auf die Zylinderachse 32 hin verschoben wird und eine Kraft in radialer Richtung auf den Spannbackenträger 21 und somit auf die Spannbacke 25 bzw. die Klemmfläche 30 ausgeübt wird.

Wie aus Figur 2 ersichtlich ist, weist die Spannhülse 24 eine im Wesentlichen hohlzylindrische Form auf, wobei der Hohlzylinder im Bereich seines zu den Spannbackenträgern 21 hinzeigenden Endes drei voneinander in Umfangsrichtung der Spannhülse 24 um 120° beabstandete schlitzförmige Durchbrechungen 33 aufweist. Diese Durchbrechungen 33 erstrecken sich ausgehend von dem spannbackenträgerseitigen Ende des Hohlzylinders der Spannhülse 24 unterschiedlich weit in den Hohlzylindern der Spannhülse 24 hinein.

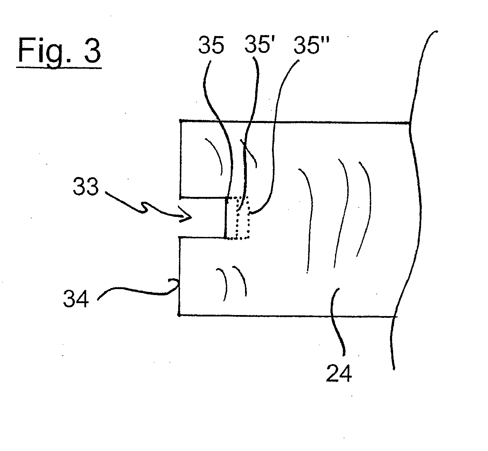

Dies ist schematisch in Figur 3 dargestellt, die eine Ansicht von oben auf die Spannhülse 24 aus Figur 2 zeigt. Deutlich ist die sich ausgehend vom vorderen Ende 34 der Spannhülse 24 erstreckende Durchbrechung 33 zu erkennen, die mit einem Grund 35 endet. Dabei weist die Durchbrechung 33 für die erste Spannbacke die geringste Tiefe auf. Die Längen der Durchbrechungen 33 für die zweiten und dritten Spannbackenträger in axialer Richtung sind um 5 mm größer als die Durchbrechung 33 für den ersten Spannbackenträger. Schematisch sind in Figur 3 die Gründe 35' und 35" der zweiten und dritten Durchbrechungen zum besseren Verständnis gepunktet eingezeichnet.

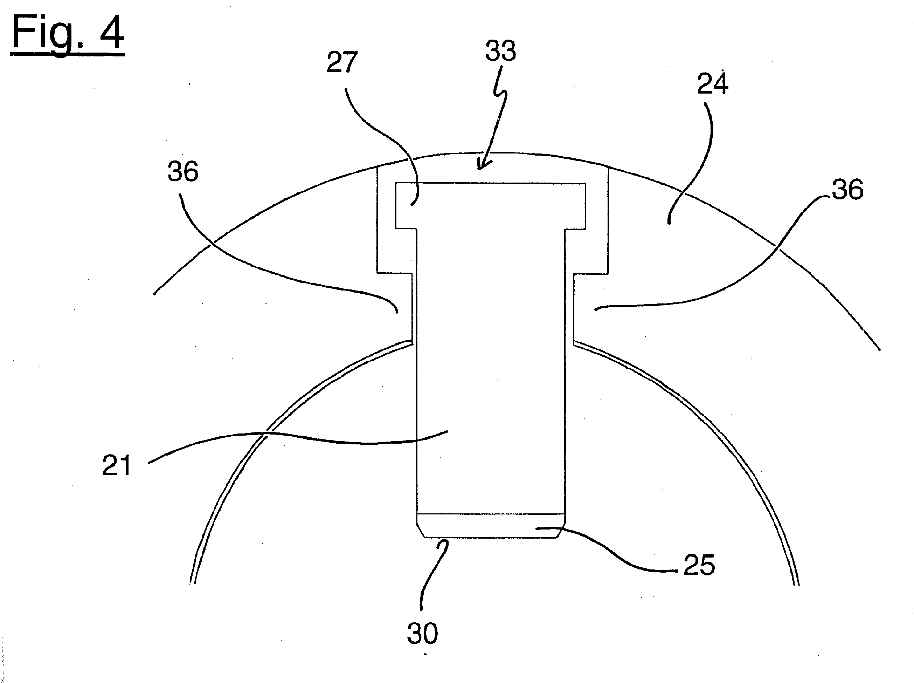

Um zu verhindern, dass ein Spannbackenträger 21 beim Einlegen in das Spannfutter 20 unmittelbar in Richtung auf die Zylinderachse 32 "durchfällt", weist jede der schlitzförmigen Durchbrechungen in einem Querschnitt senkrecht zur Zylinderachse 32 eine Verjüngung 36 auf, die mit einer korrespondierenden Verbreiterung 37 des Spannbackenträgers 21 zusammenwirkt. Dies ist schematisch in Figur 4 in einer Schnittansicht in einer Ebene senkrecht zur Zylinderachse 32 dargestellt. Die Durchbrechung 33 der Spannhülse 24 weist eine Verjüngung 36 auf, während an dem Spannbackenträger 21 an dem oberen, der Spannbacke 25 gegenüberliegend angeordneten Ende ein verdickter Abschnitt 37 vorgesehen ist, wobei ein Durchfallen des Spannbackenträgers 21 beim Einlegen in das Spannfutter dadurch verhindert wird, dass die Verdickung 37 des Spannbackenträgers 21 mit der Verjüngung 36 in Eingriff tritt. Dabei erstreckt sich in der dargestellten Ausführungsform die Verdickung 37 am oberen Ende des Spannbackenträgers 21 über dessen gesamte Länge, ebenso wie sich die Verjüngung 36 über die gesamte Länge der Spannfläche 31 und die gesamte Länge der Durchbrechung 33 erstreckt. Abgesehen von ihrer Länge (siehe Figur 3) sind die drei an der Spannhülse 24 vorgesehenen Durchbrechungen identisch ausgestaltet.

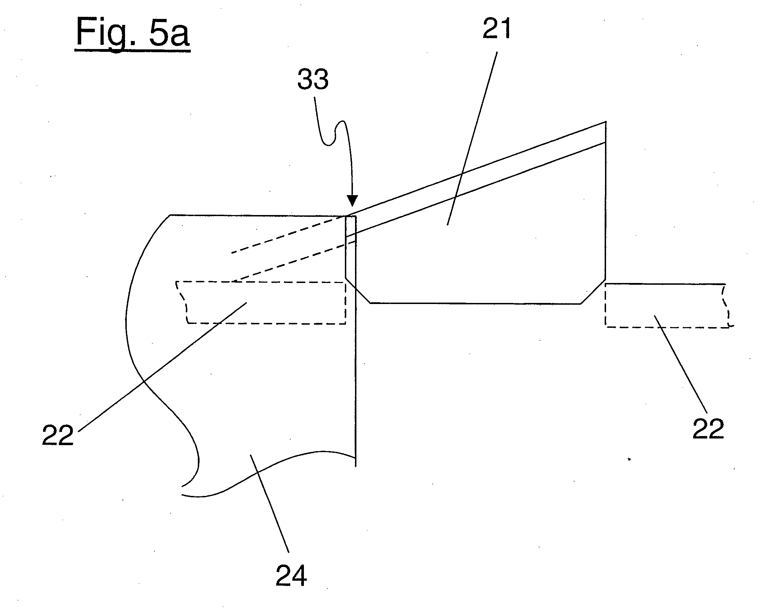

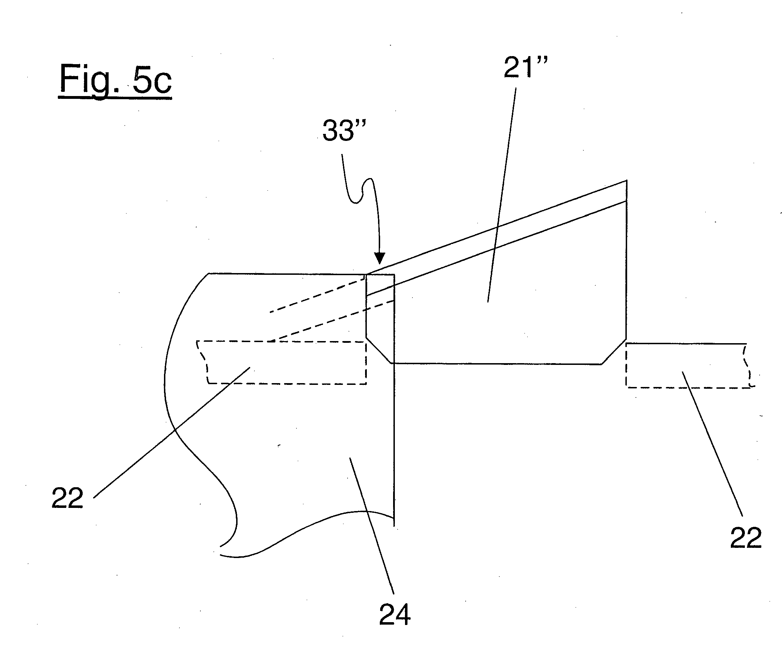

Im Folgenden wird anhand der Figuren 5a - 5c beschrieben, wie drei Spannbackenträger 21, 21' und 21" nacheinander in das Futter 20 eingelegt werden.

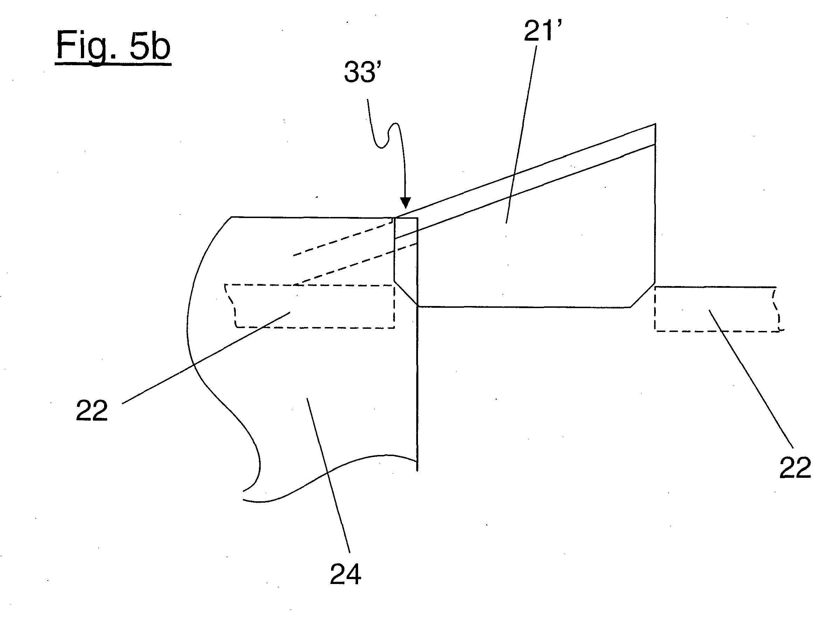

In Figur 5a befindet sich die Spannhülse 24 in der in Figur 2 dargestellten ersten Position zum Einlegen eines ersten Spannbackenträgers 21 in das Futter. Dazu befindet sich die Spannhülse 24 in einer in einer Richtung parallel zur Zylinderachse 32 fast vollständig aufgefahrenen Position während die Durchbrechung 33 vertikal nach oben zeigt. Der Spannbackenträger 21 wird von oben in die Durchbrechung 33 in der Spannhülse 24 eingelegt. Nach dem Einlegen des ersten Spannbackenträgers 21 wird die Spannhülse 24 um etwa 5 mm in Richtung auf den Spannbackenträger 21 hinbewegt. Die Spannhülse 24 befindet sich dann in einer in Figur 5b gezeigten Position in Bezug auf die Verschiebung parallel zur Zylinderachse 32. In dieser lateralen Position der Spannhülse 24 deckt die Spannhülse 24 die ersten 5 mm des ersten Spannbackenträgers 21 ab, so dass dieser nicht mehr nach oben aus dem Spannfutter entnommen werden kann und auch nicht mehr aus diesem herausfallen kann. Sodann wird die Spannhülse 24 um 120° gedreht, so dass, wie in Figur 5b dargestellt, die zweite Durchbrechung 33' der Spannhülse 24 vertikal nach oben zeigt. Diese zweite Durchbrechung 33', welche eine dem ersten Verschiebeschritt der Spannhülse 24 entsprechende, um 5 mm gegenüber der ersten Durchbrechung 33 vergrößerte Länge aufweist, zeigt vertikal nach oben. Der zweite Spannbackenträger 21' kann senkrecht von oben in diese zweite Durchbrechung 33' eingelegt werden. Nachfolgend wird die Spannhülse 24 wieder um 5 mm in einer Richtung parallel zur Zylinderachse auf den Spannbackenträger 21 hin verschoben. In dieser Position entdeckt dann die Spannhülse 24 gerade die ersten 5 mm auch des zweiten Spannbackenträgers 21' ab, so dass dieser nicht mehr aus dem Futter entnommen werden kann oder aus diesem herausfallen kann.

Nach einer weiteren Drehung der Spannhülse 24 um 120° zeigt eine dritte Durchbrechung 33", welche wiederum gegenüber der zweiten Durchbrechung 33' eine um 5 mm größere Erstreckung in einer Richtung parallel zur Zylinderachse aufweist, vertikal nach oben. In diese Durchbrechung 33" kann nun die dritte Spannhülse 21" eingelegt werden. Nach einem weiteren Schritt des Verfahrens sind alle drei Spannbackenträger in dem Futter aufgenommen und der zu haltende Gegenstand, d. h. insbesondere die Luppe bzw. der Spanndorn, können zwischen die Spannbacken in die Führungshülse 22 eingelegt werden. Danach wird die Spannhülse 24 in der gleichen Richtung wie zuvor weiter verschoben, so dass die Spannbackenträger 21, 21', 21" und mit ihnen die Spannbacken in Richtung auf die Zylinderachse 32 hin bewegt werden und bei Eingriff mit dem zu spannenden Objekt eine Klemmkraft in radialer Richtung auf dieses ausüben.

Der umgekehrte Verfahrensablauf ermöglicht ein einfaches und schnelles Entnehmen der einzelnen Spannbackenträger durch nur einen Benutzer und ein nachfolgendes Austauschen der Spannbackenträger gegen Spannbackenträger, welche zum Klemmen eines Gegenstands mit anderem Durchmesser vorgesehen sind. Unabhängig vom Durchmesser des zu spannenden Gegenstands kann immer das gleiche Spannfutter verwendet werden, wobei nur die Spannbackenträger ausgetauscht werden. Das Spannfutter eignet sich aufgrund seiner Fähigkeit zum Klemmen von Gegenständen mit unterschiedlichem Durchmesser zur Aufnahme sowohl der Luppe als auch des Spanndorns. Die modulare Ausgestaltung ermöglicht einen wirtschaftlichen Betrieb der Kaltpilgerwalzanlage, da nur ein Typ von Spannfutter gewartet werden muss und nur für diesen einen Typ Ersatzteile und Spannbackenträger bereitgehalten werden müssen.

Für Zwecke der ursprünglichen Offenbarung wird darauf hingewiesen, dass sämtliche Merkmale, wie sie sich aus der vorliegenden Beschreibung, den Zeichnungen und den Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, so weit dies nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen wird hier nur der Kürze und der Lesbarkeit der Beschreibung wegen verzichtet.

Während die Erfindung im Detail in den Zeichnungen und der vorangehenden Beschreibung dargestellt und beschrieben wurde, erfolgt diese Darstellung und Beschreibung lediglich beispielhaft und ist nicht als Beschränkung des Schutzbereichs gedacht, so wie er durch die Ansprüche definiert wird.

### Bezugszeichenliste

- 1: Walzgerüst
- 2: Walze
- 3: Walze
- 4: Walzdorn
- 6: Auslaufspannvorrichtung für das fertig reduzierte Rohr
- 7: Einlaufspannvorrichtung für die Luppe
- 8, 9: Vorschubspannschlitten für die Luppe
- 11: Luppe
- 10, 12: Dornwiderlager
- 13 - 18: Spannfutter

- 20: Spannfutter
- 21: Spannbackenträger
- 22: Führungshülse
- 23: Hohlraum
- 24: Spannhülse
- 25: Spannbacken

- 27: Lager
- 28: Antrieb
- 29: Außenflächen
- 30: Klemmfläche
- 31: Spannflächen
- 32: Zylinderachse
- 33, 33', 33": Durchbrechungen
- 34: vorderes Ende der Spannhülse
- 35: Grund
- 36: Verjüngung
- 37: Verdickter Abschnitt

## Patentansprüche

1. Spannfutter (20) für eine Kaltpilgerwalzanlage,
mit einer im Wesentlichen hohlzylindrischen Spannhülse (24) mit einer inneren Mantelfläche und einer Zylinderachse (32), wobei die innere Mantelfläche zumindest einen Spannabschnitt (31) aufweist, dessen Oberfläche in axialer Richtung einen Winkel mit der Zylinderachse (32) einschließt, wobei die Spannhülse (24) um die Zylinderachse (32) drehbar ist,
und mit mindestens einem ersten und einem zweiten Spannbackenträger (21, 21', 21")
wobei jeder Spannbackenträger (21, 21', 21") eine sich im Wesentlichen parallel zur Zylinderachse (32) erstreckende Außenfläche (29) und eine der Außenfläche (29) gegenüberliegend angeordnete, sich im Wesentlichen parallel zur Zylinderachse (32) erstreckende Klemmfläche (30) aufweist, wobei die Außenfläche (29) und die Klemmfläche (30) einen Keil definieren und
wobei die Spannhülse (24) parallel zur Zylinderachse (32) und relativ zu den Spannbackenträgern (21) derart verschiebbar ist, dass der Spannabschnitt (31) der Spannhülse (24) mit der Außenfläche (29) der Spannbackenträger (21, 21', 21") in Eingriff tritt, **dadurch gekennzeichnet, dass** die Spannhülse (24) an einem ersten Ende mindestens eine erste schlitzförmige Durchbrechung (33, 33', 33") aufweist, so dass ein Spannbackenträger (21, 21', 21") in radialer Richtung durch die Durchbrechung (33, 33', 33") in die Spannhülse (24) einführbar ist.

2. Spannfutter (20) nach Anspruch 1, **dadurch gekennzeichnet, dass** die Spannhülse (24) mindestens eine erste und eine zweite schlitzförmige Durchbrechung (33, 33', 33") aufweist, wobei die erste und die zweite Durchbrechung (33, 33', 33") in einer Richtung parallel zur Zylinderachse (32) voneinander beabstandete Enden (35, 35', 35") aufweisen.

3. Spannfutter (20) nach Anspruch 1 oder 2, **dadurch gekennzeichnet, dass** die Spannhülse (24) drei in Umfangsrichtung um je 120° voneinander beabstandete schlitzförmige Durchbrechungen (33, 33', 33") aufweist, die in einer Richtung parallel zur Zylinderachse (32) voneinander beabstandete Enden (35, 35', 35") aufweisen.

4. Spannfutter (20) nach einem der Ansprüche 1 bis 3, **dadurch gekennzeichnet, dass** die Durchbrechung (33, 33', 33") der Spannhülse (24) betrachtet in einer zu der Zylinderachse (32) senkrechten Ebene einen in Umfangsrichtung verjüngten Abschnitt (36) aufweist.

5. Spannfutter (20) nach einem der Ansprüche 1 bis 4, **dadurch gekennzeichnet, dass** der Spannbackenträger (21, 21', 21") einen in Umfangrichtung verbreiterten Abschnitt (27) aufweist.

6. Spannfutter (20) nach einem der Ansprüche 1 bis 5, **dadurch gekennzeichnet, dass** es eine im Wesentlichen hohlzylindrische Führungshülse (22) mit einem ersten und einem zweiten Ende aufweist, in welcher das mit dem Spannfutter zu haltende Objekt aufnehmbar ist, wobei die Führungshülse zumindest eine Durchbrechung zur Aufnahme eines Spannbackenträgers (21) aufweist.

7. Spannfutter (20) nach einem der Ansprüche 1 bis 6, **dadurch gekennzeichnet, dass** die Führungshülse (22) um die Zylinderachse (32) drehbar ist, wobei die Führungshülse (22) an ihrem ersten und ihrem zweiten Ende je ein Lager (26, 27) aufweist, wobei die Spannbackenträger (21, 21', 21") und die Spannhülse (24) zwischen den Lagern angeordnet sind.

8. Kaltpilgerwalzanlage mit einem Spannfutter (20) nach einem der Ansprüche 1 bis 7.

9. Kaltpilgerwalzanlage nach Anspruch 8, **dadurch gekennzeichnet, dass** das Spannfutter so eingerichtet ist, dass es die Luppe aufnimmt und hält.

10. Kaltpilgerwalzanlage nach Anspruch 8 oder 9, **dadurch gekennzeichnet, dass** das Spannfutter (20) so eingerichtet ist, dass es einen Walzdorn (4) oder einen mit diesem verbundenen Werkzeughalter aufnimmt und hält.

11. Kaltpilgerwalzanlage nach einem der Ansprüche 8 bis 10 mit
einem Dornwiderlager (10, 12), einer Vorschubspanneinrichtung (8, 9) für die Luppe, einer Einlaufspanneinrichtung (7) für die Luppe, einer Auslaufspanneinrichtung (6) für das reduzierte Rohr und einer Spanneinrichtung für einen Walzdorn (4) oder einen mit diesem verbundenen Werkzeughalter, wobei das Dornwiderlager (10, 12), die Vorschubspanneinrichtung (8, 9) für die Luppe, die Einlaufspanneinrichtung (7) für die Luppe, die Auslaufspanneinrichtung (6) für das reduzierte Rohr und die Spanneinrichtung für den Walzdorn (4) oder den mit diesem verbundenen Werkzeughalter jeweils mindestens ein Spannfutter (13-18) nach einem der Ansprüche 1 bis 7 aufweisen.

12. Kaltpilgerwalzanlage nach Anspruch 11, **dadurch gekennzeichnet, dass** die Spannfutter (13,-18) des Dornwiderlagers (10, 12), der Vorschubspanneinrichtung (8, 9) für die Luppe, der Einlaufspanneinrichtung (7) für die Luppe, der Auslaufspanneinrichtung (6) für das reduzierte Rohr und der Spanneinrichtung für den Walzdorn (4) oder den mit diesem verbundenen Werkzeughalter bis auf die Dimensionierung der Spannbackenträger identisch sind.

13. Verfahren zum Montieren von Spannbackenträgern in einem Spannfutter für eine Kaltpilgerwalzanlage nach einem der Ansprüche 1 bis 7, mit den Schritten,
Verschieben einer hohlzylindrischen Spannhülse, so dass das Futter zum Einbringen der Spannbackenträger geöffnet ist,
Einlegen eines ersten Spannbackenträgers in das Futter,
Verschieben der Spannhülse, so dass die Spannhülse den ersten Spannbackenträger in dem Futter hält,
Drehen der Spannhülse zusammen mit dem ersten Spannbackenträger in eine zweite Position,
Einlegen eines zweiten Spannbackenträgers in das Futter und
Verschieben der Spannhülse über die Spannbackenträger, so dass die Spannhülse eine Kraft auf die Spannbackenträger in radialer Richtung ausübt.

## Claims

1. A clamping chuck (20) for a cold pilger rolling mill
with a substantially hollow-cylindrical clamping sleeve (24) with an inner peripheral surface and a cylinder axis (32), wherein the inner peripheral surface has at least one clamping portion (31), the surface of which includes an angle with the cylinder axis (32) in the axial direction, wherein the clamping sleeve (24) is rotatable about the cylinder axis (32),
and with at least a first and a second clamping jaw carrier (21, 21', 21"),
wherein each clamping jaw carrier (21, 21', 21") has an outside surface (29) extending substantially parallel to the cylinder axis (32) and a clamp surface (30) arranged in opposite relationship to the outside surface (29) and extending substantially parallel to the cylinder axis (32), wherein the outside surface (29) and the clamp surface (30) define a wedge, and
wherein the clamping sleeve (24) is displaceable parallel to the cylinder axis (32) and relative to the clamping jaw carriers (21) in such a way that the clamping portion (31) of the clamping sleeve (24) engages with the outside surface (29) of the clamping jaw carriers (21, 21', 21"), **characterized in that** the clamping sleeve (24) has at least one first slot-shaped opening (33, 33', 33") at a first end so that a clamping jaw carrier (21, 21', 21") can be introduced in the radial direction through the opening (33, 33', 33") into the clamping sleeve (24).

2. A clamping chuck (20) as set forth in claim 1 **characterized in that** the clamping sleeve (24) has at least a first and a second slot-shaped opening (33, 33', 33"), wherein the first and second openings (33, 33', 33") have ends (35, 35', 35") spaced from each other in a direction parallel to the cylinder axis (32).

3. A clamping chuck (20) as set forth in claim 1 or claim 2 **characterized in that** the clamping sleeve (24) has three slot-shaped openings (33, 33', 33") which are spaced from each other in the peripheral direction each through 120° and which have ends (35, 35', 35") spaced from each other in a direction parallel to the cylinder axis (32).

4. A clamping chuck (20) as set forth in one of claims 1 through 3 **characterized in that** the opening (33, 33', 33") of the clamping sleeve (24) considered in a plane perpendicular to the cylinder axis (32) has a portion (36) which is narrowed in the peripheral direction.

5. A clamping chuck (20) as set forth in one of claims 1 through 4 **characterized in that** the clamping jaw carrier (21, 21', 21 ") has a portion (27) widened in the peripheral direction.

6. A clamping chuck (20) as set forth in one of claims 1 through 5 **characterized in that** it has a substantially hollow-cylindrical guide sleeve (22) having a first and a second end and in which the object to be held with the clamping chuck can be received, wherein the guide sleeve has at least one opening for receiving a clamping jaw carrier (21).

7. A clamping chuck (20) as set forth in one of claims 1 through 6 **characterized in that** the guide sleeve (22) is rotatable about the cylinder axis (32), wherein the guide sleeve (22) has a respective bearing (26, 27) at its first and its second end, wherein the clamping jaw carriers (21, 21', 21 ") and the clamping sleeve (24) are arranged between the bearings.

8. A cold pilger rolling mill comprising a clamping chuck (20) as set forth in one of claims 1 through 7.

9. A cold pilger rolling mill as set forth in claim 8 **characterized in that** the clamping chuck is so adapted that it receives and holds the tube shell.

10. A cold pilger rolling mill as set forth in claim 8 or claim 9 **characterized in that** the clamping chuck (20) is so adapted that it receives and holds a rolling mandrel (4) or a tool holder connected thereto.

11. A cold pilger rolling mill as set forth in one of claims 8 through 10
with a mandrel support (10, 12), a feed clamping device (8, 9) for the tube shell, an entry clamping device (7) for the tube shell, an exit clamping device (6) for the reduced tube and a clamping device for a rolling mandrel (4) or a tool holder connected thereto, wherein the mandrel support (10, 12), the feed clamping device (8, 9) for the tube shell, the entry clamping device (7) for the tube shell, the exit clamping device (6) for the reduced tube and the clamping device for the rolling mandrel (4) or the tool holder connected thereto each have at least one clamping chuck (13-18) as set forth in one of claims 1 through 7.

12. A cold pilger rolling mill as set forth in claim 11 **characterized in that** the clamping chuck (13-18) of the mandrel support (10, 12), the feed clamping device (8, 9) for the tube shell, the entry clamping device (7) for the tube shell, the exit clamping device (6) for the reduced tube and the clamping device for the rolling mandrel (4) or the tool holder connected thereto are identical except for the dimensioning of the clamping jaw carriers.

13. A method of mounting clamping jaw carriers in a clamping chuck for a cold pilger rolling mill as set forth in one of claims 1 to 7 comprising the steps:
displacing a hollow-cylindrical clamping sleeve so that the chuck is opened for introduction of the clamping jaw carriers,
inserting a first clamping jaw carrier into the chuck,
displacing the clamping sleeve so that the clamping sleeve holds the first clamping jaw carrier in the chuck,
rotating the clamping sleeve together with the first clamping jaw carrier into a second position,
inserting a second clamping jaw carrier into the chuck, and
displacing the clamping sleeve over the clamping jaw carriers so that the clamping sleeve exerts a force on the clamping jaw carriers in the radial direction.

## Revendications

1. Mandrin de serrage (20) pour installation de laminage à froid à pas de pèlerin, comportant un manchon de serrage (24), pour l'essentiel cylindrique creux, ayant une surface latérale intérieure et un axe de cylindre (32), la surface latérale intérieure présentant au moins un segment de serrage (31), dont la surface fait dans la direction axiale un certain angle avec l'axe de cylindre (32), le manchon de serrage (24) pouvant tourner autour de l'axe du cylindre (32),
et comportant au moins un premier et un deuxième supports de mâchoire de serrage (21, 21', 21 "),
chacun des supports de mâchoire de serrage (21, 21', 21 ") présentant une surface extérieure (29) s'étendant pour l'essentiel parallèlement à l'axe du cylindre (32), et une surface de serrage (30), disposée en un point opposé à la surface extérieure (29) et s'étendant pour l'essentiel parallèlement à l'axe du cylindre (32), la surface extérieure (29) et la surface de serrage (30) définissant un coin, et
le manchon de serrage (24) pouvant être déplacé parallèlement à l'axe du cylindre (32) et par rapport aux supports de mâchoire de serrage (21), de façon telle que le segment de serrage (31) du manchon de serrage (24) entre en prise avec la surface extérieure (29) du support de mâchoire de serrage (21, 21', 21 "),
**caractérisé en ce que** le manchon de serrage (24) comporte à l'une de ses extrémités au moins un premier passage (33, 33', 33") en forme de fente, de telle sorte qu'un support de mâchoire de serrage (21, 21', 21") peut être inséré par le passage (33, 33', 33") dans le manchon de serrage (24), dans la direction radiale.

2. Mandrin de serrage (20) selon la revendication 1, **caractérisé en ce que** le manchon de serrage (24) comprend au moins un premier et un deuxième passages (33, 33', 33") en forme de fente, le premier et le deuxième passages (33, 33', 33") présentant des extrémités (35, 35', 35") écartées l'une de l'autre dans une direction parallèle à l'axe du cylindre (32).

3. Mandrin de serrage (20) selon la revendication 1 ou 2, **caractérisé en ce que** le manchon de serrage (24) comprend trois passages (33, 33', 33") en forme de fente, écartés les uns des autres de 120° dans la direction périphérique, et qui présentent des extrémités (35, 35', 35") écartées l'une de l'autre dans une direction parallèle à l'axe du cylindre (32).

4. Mandrin de serrage (20) selon l'une des revendications 1 à 3, **caractérisé en ce que** le passage (33, 33', 33") du manchon de serrage (24) présente, quand on regarde dans un plan perpendiculaire à l'axe du cylindre (32), un segment (36) qui se rétrécit dans la direction périphérique.

5. Mandrin de serrage (20) selon l'une des revendications 1 à 4, **caractérisé en ce que** le support de mâchoire de serrage (21, 21', 21 ") comprend un segment (27) qui s'élargit dans la direction périphérique.

6. Mandrin de serrage (20) selon l'une des revendications 1 à 5, **caractérisé en ce qu'**il comprend une douille de guidage (22), pour l'essentiel cylindrique creuse, qui comprend une première et une deuxième extrémités, douille dans laquelle l'objet qui doit être maintenu à l'aide du mandrin de serrage peut être logé, la douille de guidage comprenant au moins un passage pour recevoir un support de mâchoire de serrage (21).

7. Mandrin de serrage (20) selon l'une des revendications 1 à 6, **caractérisé en ce que** la douille de guidage (22) peut tourner autour de l'axe du cylindre (32), la douille de guidage (22) comportant en chacune de sa première et de sa deuxième extrémités un palier (26, 27), le support de mâchoire de serrage (21, 21', 21") et la douille de guidage (24) étant disposés entre les paliers.

8. Installation de laminage à froid à pas de pèlerin comportant un mandrin de serrage (20) selon l'une des revendications 1 à 7.

9. Installation de laminage à froid à pas de pèlerin selon la revendication 8, **caractérisée en ce que** le mandrin de serrage est disposé de façon à loger et maintenir la loupe.

10. Installation de laminage à froid à pas de pèlerin selon la revendication 8 ou 9, **caractérisée en ce que** le mandrin de serrage (20) est disposé de façon à loger et à maintenir un mandrin de laminage (4) ou un porte-outil relié à ce dernier.

11. Installation de laminage à froid à pas de pèlerin selon l'une des revendications 8 à 10, comportant une butée de mandrin (10, 12), un dispositif de serrage (8, 9) à l'avance pour la loupe, un dispositif de serrage (7) à l'entrée pour la loupe, un dispositif de serrage (6) à la sortie pour le tube réduit, et un dispositif de serrage pour un mandrin de laminage (4) ou un porte-outil relié à ce dernier, la butée de mandrin (10, 12), le dispositif de serrage (8, 9) à l'avance pour la loupe, le dispositif de serrage (7) à l'entrée pour la loupe, le dispositif de serrage (8) à la sortie pour le tube réduit et le dispositif de serrage pour le mandrin de laminage (4) ou le porte-outil relié à ce dernier comportant respectivement un mandrin de serrage (13-18) selon l'une des revendications 1 à 7.

12. Installation de laminage à froid à pas de pèlerin selon la revendication 11, **caractérisée en ce que** le mandrin de serrage (13-18) de la butée de mandrin (10, 12), du dispositif de serrage (8, 9) à l'avance pour la loupe, du dispositif de serrage (7) à l'entrée pour la loupe, du dispositif de serrage (6) à la sortie pour le tube réduit et du dispositif de serrage pour le mandrin de laminage (4) ou le porte-outil qui est relié à ce dernier sont identiques jusqu'au dimensionnement du support de mâchoire de serrage.

13. Procédé pour le montage de supports de mâchoire de serrage dans un mandrin de serrage pour installation de laminage à froid à pas de pèlerin selon l'une des revendications 1 à 7, comportant les étapes suivantes :
déplacement d'un manchon de serrage cylindrique creux, de façon à ce que le mandrin soit ouvert pour permettre l'introduction du support de mâchoire de serrage,
insertion d'un premier support de mâchoire de serrage dans le mandrin,
déplacement du manchon de serrage, de façon à ce que le manchon de serrage maintienne le premier support de mâchoire de serrage dans le mandrin,
rotation du mandrin de serrage, en même temps que du premier support de mâchoire de serrage, jusqu'à une deuxième position,
insertion d'un deuxième support de mâchoire de serrage dans le mandrin, et
déplacement du manchon de serrage par-dessus le support de mâchoire de serrage, de façon à ce que le manchon de serrage exerce une force sur le support de mâchoire de serrage dans la direction radiale.
